# EUROPÄISCHE PATENTSCHRIFT

(11) **EP 1 917 651 B1**
(45) Veröffentlichungstag und Bekanntmachung des Hinweises auf die Patenterteilung: **26.08.2009**
(21) Anmeldenummer: 06762734.9
(22) Anmeldetag: 20.07.2006
(51) Int. Cl.: G08B 26/00

(54) **GEBÄUDELEITTECHNIK- ODER GEFAHRENMELDEANLAGE**
FACILITY MANAGEMENT SYSTEM OR DANGER WARNING SYSTEM
SYSTEME DE CONTROLE AUTOMATIQUE DE BATIMENTS OU SYSTEME AVERTISSEUR DE DANGER

(30) Priorität: 05.08.2005 DE 102005037047
(43) Veröffentlichungstag der Anmeldung: 07.05.2008
(73) Patentinhaber: Novar GmbH, 41469 Neuss (DE)
(72) Erfinder: LÜBBEN, Bernd, 41352 Korschenbroich (DE)
(74) Vertreter: Prietsch, Reiner
(86) Internationale Anmeldenummer: PCT/EP2006/007181
(87) Internationale Veröffentlichungsnummer: WO 2007/017073

(56) Entgegenhaltungen:
- EP-A1- 0 532 787
- EP-A2- 0 468 097
- EP-A2- 0 927 981
- DE-A1- 4 322 841
- DE-A1- 19 850 869
- US-A- 4 423 456
- US-A- 5 519 557

## Beschreibung

Die Erfindung betrifft eine Gebäudeleittechnik- oder Gefahrenmeldeanlage mit einer zweiadrigen Ringbusleitung zur Spannungsversorgung und zur Kommunikation mit Busteilnehmern, die je eine Busteilnehmerschaltung umfassen, welche an die Adern der Ringbusleitung jeweils über eine Verpolschutzbrücke angeschlossen ist.

Es sind Gebäudeleittechnik- und Gefahrenmeldeanlagen mit zweiadrigem Ringbus bekannt, an den die Busteilnehmer, z.B. Gefahrenmelder, parallel angeschlossen sind. Bei einer Unterbrechung des Ringbusses verbleiben zwei Stichleitungen, die unabhängig voneinander betrieben werden können. Im Kurzschlussfall kann das betroffene Segment über separate Trenner, die von der Zentrale der Gebäudeleittechnik- oder Gefahrenmeldeanlage gesteuert werden, herausgetrennt werden, so dass z.B. verkürzte aber funktionsfähige Stichleitungen weiter zur Verfügung stehen.

Im Folgenden umfasst der Begriff "Meldeanlage" sowohl Gebäudeleittechnik- als auch Gefahrenmeldeanlagen.

Im Zug der Montage einer solchen Meldeanlage müssen die Busteilnehmer an den Ringbus angeschlossen und die Trenner in den Ringbus eingeschleift werden. Es sind Busteilnehmer bekannt, die über einen Verpolschutz verfügen und daher schnell anzuschließen sind. Die Trenner dagegen müssen mit korrekter Polung angeschlossen werden.

Farbkodierte Leitungen vereinfachen die Montage der Trenner nur bedingt, da es keine weltweit einheitliche Norm für die Farbkodierung gibt. Daher ist häufig, insbesondere bei der Erweiterung bestehender Anlagen, ein zeitaufwändiges Ausmessen der einzelnen Adern unerlässlich.

Es sind weiterhin Meldeanlagen bekannt, bei denen Trenner, meist in Form von Relais oder FETs, in die Busteilnehmer integriert sind. Solche Busteilnehmer werden in Reihe in den Ringbus geschaltet, wobei auf korrekte Polung geachtet werden muss. Durch die Integration wird der Montageaufwand zwar reduziert, aber die einzelnen Adern müssen weiterhin zeitaufwendig ausgemessen werden. Solche Meldeanlagen sind aus DE 36 14 692 A1, DE 43 22 841 A1, CH 651 688 A5 und EP 468 097 A2 bekannt.

Eine Busteilnehmerschaltung die für eine Meldeanlage der einleitend genannten Gattung verwendbar ist, ist aus der DE 198 50 869 A1 bekannt. Diese Busteilnehmerschaltung hat zwei Trenner, mittels derer je zwei Adern der Ringbusleitung verbindbar sind. Daher muss der Busteilnehmer bei beidseitiger Speisung trotz der Verpolschutzbrücken mit gleichnamiger Polung an den Bus angeschlossen werden, so dass auch in diesem Fall die einzelnen Adern ausgemessen werden müssen.

Der Erfindung liegt die Aufgabe zugrunde, die Montage von Gebäudeleittechnik- und Gefahrenmeldeanlagen zu vereinfachen.

Diese Aufgabe wird erfindungsgemäß dadurch gelöst, dass jeder Busteilnehmer zwei Verpolschutzbrücken umfasst, mittels derer er in den Ringbus eingeschleift wird. Die Verpolschutzbrücken bestehen aus zunächst im Sperrzustand befindlichen FETs. Die Gleichspannungsanschlüsse der beiden Brücken sind parallel geschaltet und zwischen den Gleichspannungsanschlüssen ist eine Busteilnehmerschaltung. Die Busteilnehmerschaltung misst die Spannungsverhältnisse und deren Polung an den Wechselspannungseingängen der Brücken und gewährleistet durch Ansteuern der FETs die Funktion des Busteilnehmers und des Ringbusses. Durch einen symmetrischen Aufbau sind die Busteilnehmer sehr schnell zu montieren. Ein- und Ausgang werden erst im Betrieb festgelegt und es ist somit unerheblich, welche Leitung an welches Klemmenpaar angeschlossen wird. Weiter sind keine zusätzlichen Bauteile zur Realisierung einer Trennfunktion notwendig, da durch Schalten der FETs der ausgangsseitigen Brücke in den Sperrzustand das dahinter befindliche Bussegment abgetrennt werden kann. Ein weiterer Vorteil liegt darin, dass im laufenden Betrieb die Speisung des Busteilnehmers über seinen vormaligen Ausgang erfolgen kann. Dies kann z.B. notwendig sein, wenn der Ringbus in zwei Stichleitungen aufgetrennt wird.

Gemäß Patentanspruch 1 erhält die Busteilnehmerschaltung ihre Versorgungsspannung zunächst über parasitäre Dioden zweier sich in einer Brücke diagonal gegenüberliegender FETs. Anschließend misst die Busteilnehmerschaltung die Spannungsverhältnisse an den Wechselspannungseingängen der Brücken. Wenn an genau einer Brücke eine Spannung anliegt, werden die FETs, deren parasitäre Dioden stromdurchflossen sind und zwei in der anderen Brücke sich diagonal gegenüberliegende FETs durchlässig geschaltet. Dadurch wird die Versorgungsspannung an den nächsten Busteilnehmer weitergeschaltet, oder der Ringbus geschlossen, wenn der Ausgang des Busteilnehmers mit der Zentrale der Meldeanlage verbunden ist.

In der Ausführung gemäß Patentanspruch 2 hält die Busteilnehmerschaltung alle FETs im Sperrzustand, wenn sie eine Speisespannung an den Wechselspannungseingängen beider Brücken feststellt. Dadurch wird ein Potentialausgleich zwischen den beiden Speisespannungen verhindert.

In Deutschland ist vorgeschrieben, dass ein Ringbus einer Gebäudeleittechnik- oder Gefahrenmeldeanlage im Normalbetrieb nur von einer Seite gespeist wird. In anderen Ländern, z.B. Großbritannien, erfolgt die Speisung eines Ringbusses z.B. einer Brandmeldeanlage grundsätzlich von beiden Seiten, um Spannungsverluste möglichst gering zu halten. Dieser Fall wird in Anspruch 3 berücksichtigt. Hier wird die beidseitige Speisung als "korrekt" erkannt und die entsprechenden FETs werden geschlossen.

In einer weiteren vorteilhaften Ausführungsform gemäß Anspruch 4 verfügt der Busteilnehmer über eine autarke Stromversorgung oder einen Energiespeicher z.B. in Form eines Goldcapkondensators. Dies ermöglicht einen schnellen Wiederaufbau des Ringbusses nach einem Kurzschluss.

In der Ausführung gemäß Patentanspruch 5 verfügt die Busteilnehmerschaltung über einen Speicher. In dem Speicher kann die Busteilnehmerschaltung z.B. Betriebszustände, Fehler im Bus oder Anweisungen der Zentrale speichern.

In der weiteren vorteilhaften Ausführungsform nach Patentanspruch 6 sind einige der Busteilnehmer Melder. Dies ermöglicht Umgebungs- und Funktionszustände zu überwachen und an eine Zentrale zu melden. Solche Melder können z.B. Gefahrenmelder, insbesondere Brandmelder sein. Die zu überwachenden Funktionszustände können z.B. diejenigen von Türen, Schlössern, Fenstern oder Rauchabzügen sein.

Die Erfindung wird nachfolgend anhand einer schematischen Zeichnung erläutert. Es zeigt:
- Figur 1: eine erste Ausführungsform der Erfindung,
- Figur 2: eine zweite Ausführungsform der Erfindung und
- Figur 3: ein Ablaufdiagramm.

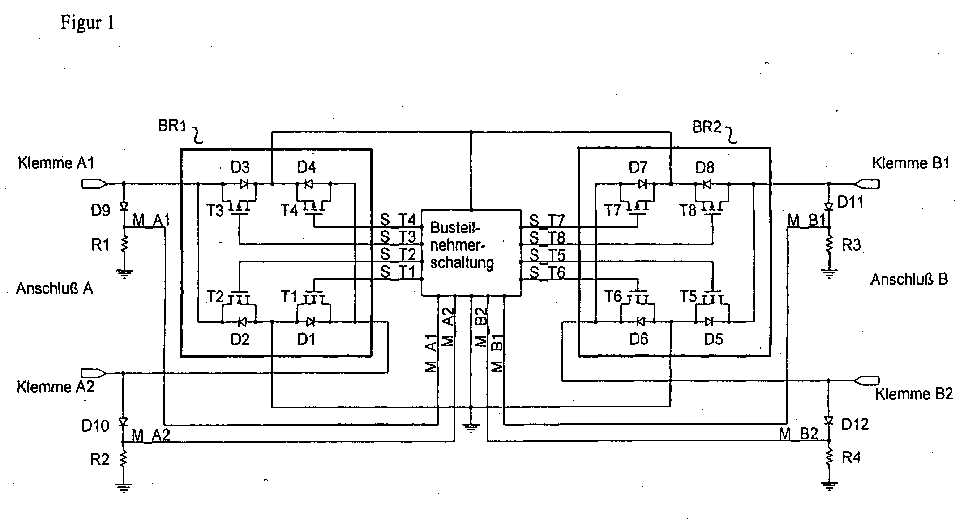

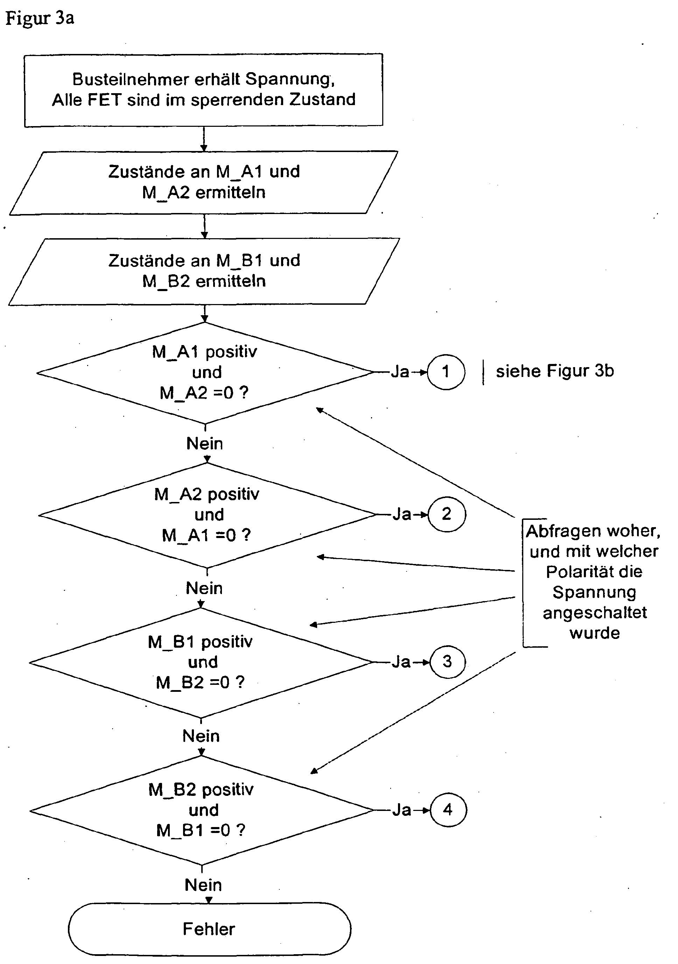

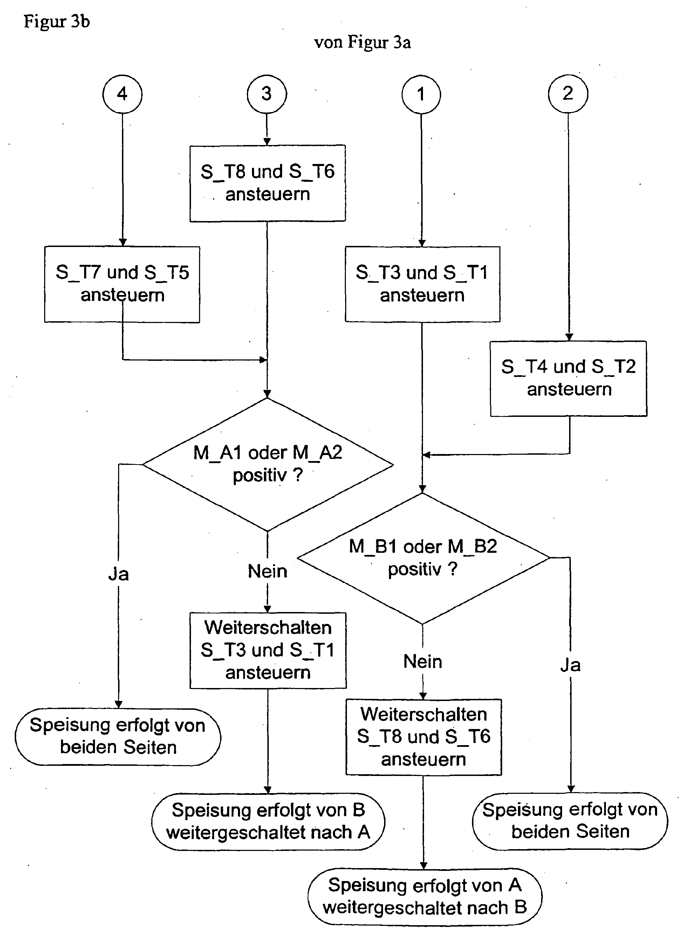

Figur 1 zeigt einen Busteilnehmer, der über eine zweiadrige Busleitung zur Gleichspannungsversorgung und zur Kommunikation mit einer Zentrale in eine Meldeanlage eingebunden ist. Der Busteilnehmer hat zwei Klemmenpaare A1, A2 und B1, B2 mittels derer er in Reihe in das Bussystem geschaltet wird. Die Klemmenpaare (Anschlüsse) A und B sind mit den Wechselspannungseingängen je eines Brückengleichrichters BR1 und BR2 verbunden. Die Gleichspannungsausgänge der beiden Brückengleichrichter BR1 und BR2 sind parallel verbunden. Parallel zu diesen Ausgängen der beiden Brückengleichrichter BR1 und BR2 liegt auch die Busteilnehmerschaltung. Die Brückengleichrichter bestehen aus je vier FETs (BR1 aus T1, T2, T3 und T4; BR2 aus T5, T6, T7 und T8). Zur Verdeutlichung der Funktionsweise sind die parasitären Diodenstrecken der FETs (T1 bis T8) als Dioden D1 bis D8 zusätzlich eingezeichnet. Die Klemmen A1, A2, B1 und B2 sind über Dioden D9, D10, D11, D12 und Widerstände R1, R2, R3, R4 jeweils mit Masse verbunden. Die Busteilnehmerschaltung ermittelt jeweils über die Anschlüsse M_A1, M_A2, M_B1 und M_B2 den Spannungsabfall an den Widerständen R1, R2, R3 und R4. In Abhängigkeit von den Meßergebnissen werden die FETs (T1 bis T8) angesteuert. Erfolgt z.B. die Speisung nur über das Klemmenpaar A1, A2 werden zunächst nähmlich diejenigen FETs, deren parasitäre Diodenstrecken stromdurchflossen sind d.h. entweder T1 und T3 oder T2 und T4, durchlässig geschaltet. Anschließend wird der Bus durch passendes Ansteuern (vgl. Figur 3) der FETs T5 bis T8 zu dem Anschluss B weitergereicht.

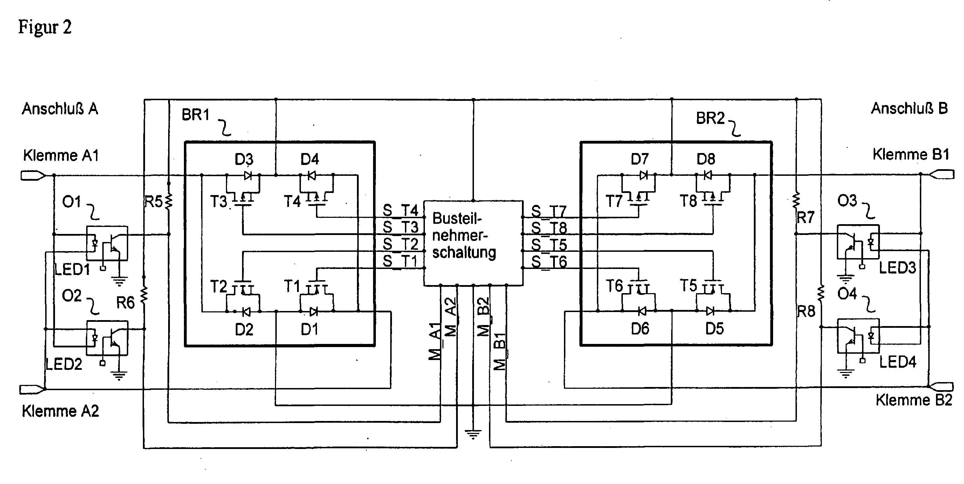

In Figur 2 ist schematisch eine Ausführungsform gezeigt, bei der die Spannungsverhältnisse und die Vorzeichen an den Klemmenpaaren A1, A2 und B1, B2 statt wie in Fig. 1 über die Widerstände R1 bis R4 mittels vier Optokopplern O1, 02, 03, 04 bestimmt wird. Jeder Anschluss A, B ist mit zwei antiparallel geschalteten LEDs (A mit LED1 und LED2, B mit LED3 und LED4) verbunden. Die LEDs (LED1 bis LED4) sind Bestandteile je eines Optokopplers O1, 02, 03 und 04. Von den Ausgängen der Optokoppler 01 bis 04 ist jeweils einer mit Masse und der andere über einen Widerstand (O1 über R5, 02 über R6, 03 über R7 und 04 über R8) mit den positiven Gleichspannungsausgängen der Brückengleichrichter BR1 und BR2 verbunden. Über die Anschlüsse M_A1, M_A2, M_A3 und M_A4 misst die Busteilnehmerschaltung jeweils den Spannungsabfall über den Widerständen R5, R6, R7 und R8. Beim Anlegen einer Gleichspannung an einem Anschluss (A oder B) liefert genau ein Optokoppler ein Signal "0". Aus der Information, welcher Optokoppler das Signal liefert, wird der Eingang (A oder B) und seine Polung bestimmt. Wird der Ringbus von beiden Seiten mit Gleichspannung gespeist, so liefern genau zwei Optokoppler, die verschiedenen Anschlüssen A, B zugeordnet sind, ein Signal "0", Die Busteilnehmerschaltung wertet die Signale der Optokoppler aus und steuert dann in Abhängigkeit der Signale die FETs T1 bis T8 analog wie im Fall der Fig. 1 an.

Die Ansteuerung der FETs T1 bis T8 in Abhängigkeit von den Signalen an den Anschlüsssen M_A1, M_A2, M_A3 und M_A4 sind in einem Ablaufdiagramm in Fig. 3 dargestellt. Das Diagramm beginnt damit, dass der Busteilnehmer Spannung erhält, und alle FETs T1 bis T8 im sperrenden Zustand sind. Dann wird die Spannung an den Klemmen A1, A2, B1 und B2 gemessen. Erfolgt die Speisung des Busteilnehmers über genau ein Klemmenpaar, so werden die entsprechenden FETs durch Anlegen einer passenden Gatespannung durchlässig. Außerdem wird der Bus durch Ansteuern des Gates zweier FETs der Brücke, welche nicht mit dem Eingangsklemmpaar verbunden ist, weitergeschaltet. Erfolgt beispielsweise die Speisung über die Klemmen A1 und A2, wobei die Spannung an A1 positiv im Vergleich zu A2 ist, so wird über S_T1 und S_T3 eine Gatespannung an die FETs T1 und T3 angelegt um den Spannungsabfall an den Diodenstrecken zu reduzieren. Nachdem sichergestellt ist, dass am Klemmpaar B1, B2 keine Spannung anliegt, werden über S_T8 und S_T6 die FETs, T8 und T6 angesteuert, um den Bus zu dem Klemmpaar B1, B2, welches nun das Ausgangsklemmpaar ist, durchzuschalten.

Erfolgt die Speisung von beiden Seiten, d.h. es liegt auch am Klemmenpaar B1, B2 eine Spannung an, wird dies festgestellt, gespeichert und kann der Zentrale gemeldet werden.

In einer anderen Programmierung der Busteilnehmerschaltung, z.B. zur Verwendung in einer Anlage mit obligatorischer Speisung des Ringbuses von beiden an die Zentrale angeschlossenen "Enden", schaltet die Busteilnehmerschaltung die entsprechenden FETs beider Brücken BR1 und BR2 durch.

Bricht die Spannungsversorgung zusammen und verfügt die Busteilnehmerschaltung über einen Energiespeicher, z. B. in Form eines Goldcapkondensators, so kann die Busteilnehmerschaltung dies als Fehler feststellen, speichern und nach dem Wiederaufbau des Ringbuses der Zentrale melden. In der Zentrale kann daraufhin eine programmierte Reaktion ausgeführt werden. Diese kann beispielsweise eine Störungsmeldung, ggf. mit Ansteuerung eines Telephonwahlgerätes, oder ein Eintrag in einen Ereignisspeicher sein.

## Patentansprüche

1. Gebäudeleittechnik- oder Gefahrenmeldeanlage mit einer zweiadrigen Ringbusleitung zur Spannungsversorgung und zur Kommunikation mit Busteilnehmern, die je eine Busteilnehmerschaltung umfassen, welche an die Adern der Ringbusleitung jeweils über eine Verpolschutzbrücke angeschlossen ist, **dadurch gekennzeichnet, dass** die Ringbusleitung durch jeden Busteilnehmer über die Verpolschutzbrücke (BR1) und eine weitere Verpolschutzbrücke (BR2) verläuft, dass die Busteilnehmerschaltung zwischen den parallelgeschalteten Gleichspannungsanschlüssen der beiden Brücken liegt, und dass die Zweige beider Brücken aus zunächst im Sperrzustand befindlichen FETs (T1 bis T8) bestehen, über deren in Stromflussrichtung gepolte, parasitäre Dioden die Busteinehmerschaltung zunächst ihre Versorgungsspannung erhält, die Spannungen und deren Vorzeichen auf den vier angeschlossenen Busadern misst und dann, wenn an genau einer der Verpolschutzbrücken eine Versorgungsspannung anliegt, diejenigen beiden FETs, deren parasitäre Dioden stromdurchflossen sind und zwei in der anderen Brücke sich diagonal gegenüberliegende FETs durchlässig schaltet.

2. Gebäudeleittechnik- oder Gefahrenmeldeanlage mit einer zweiadrigen Ringbusleitung zur Spannungsversorgung und zur Kommunikation mit Busteilnehmern, die je eine Busteilnehmerschaltung umfassen, welche an die Adern der Ringbusleitung jeweils über eine Verpolschutzbrücke angeschlossen ist, **dadurch gekennzeichnet, dass** die Ringbusleitung durch jeden Busteilnehmer über die Verpolschutzbrücke (BR1) und eine weitere Verpolschutzbrücke (BR2) verläuft, dass die Busteilnehmerschaltung zwischen den parallelgeschalteten Gleichspannungsanschlüssen der beiden Brücken liegt, und dass die Zweige beider Brücken aus zunächst im Sperrzustand befindlichen FETs (T1 bis T8) bestehen, über deren in Stromflussrichtung gepolte, parasitäre Dioden die Busteinehmerschaltung zunächst ihre Versorgungsspannung erhält, die Spannungen und deren Vorzeichen auf den vier angeschlossenen Busadern misst und wenn an beiden Brücken (BR1, BR2) eine Versorgungsspannung anliegt alle FETs (T1 bis T8) im Sperrzustand hält.

3. Gebäudeleittechnik- oder Gefahrenmeldeanlage mit einer zweiadrigen Ringbusleitung zur Spannungsversorgung und zur Kommunikation mit Busteilnehmern, die je eine Busteilnehmerschaltung umfassen, welche an die Adern der Ringbusleitung jeweils über eine Verpolschutzbrücke angeschlossen ist, **dadurch gekennzeichnet, dass** die Ringbusleitung durch jeden Busteilnehmer über die Verpolschutzbrücke (BR1) und eine weitere Verpolschutzbrücke (BR2) verläuft, dass die Busteilnehmerschaltung zwischen den parallelgeschalteten Gleichspannungsanschlüssen der beiden Brücken liegt, und dass die Zweige beider Brücken aus zunächst im Sperrzustand befindlichen FETs (T1 bis T8) bestehen, über deren in Stromflussrichtung gepolte, parasitäre Dioden die Busteinehmerschaltung zunächst ihre Versorgungsspannung erhält, die Spannungen und deren Vorzeichen auf den vier angeschlossenen Busadern misst und wenn an beiden Brücken (BR1, BR2) eine Versorgungsspannung anliegt, die Ringbusleitungen durch Ansteuern der entsprechenden FETs polrichtig schließt.

4. Anlage nach einem der Ansprüche 1 bis 3, **dadurch gekennzeichnet, dass** die Busteilnehmerschaltung einen Energiespeicher umfasst.

5. Anlage nach einem der Ansprüche 1 bis 4, **dadurch gekennzeichnet, dass** die Busteilnehmerschaltung einen Datenspeicher umfasst, einen Wegfall der Versorgungsspannung als Fehler speichert und diesen Fehler der Zentrale meldet, sobald der Busteilnehmer wieder mit der Zentrale verbunden ist.

6. Anlage nach einem der Ansprüche 1 bis 5, **dadurch gekennzeichnet, dass** mindestens einige der Busteilnehmer Melder sind.

## Claims

1. A facility management or danger warning system, comprising a two-wire ring bus line which is used to supply voltage and to communicate with bus users which each comprise a bus user circuit which is each connected to the leads of the ring bus line via a reversal protector bridge, **characterized in that** the ring bus line extends through each bus user via the reversal protector bridge (BR1) and a further reversal protector bridge (BR2), the bus user circuit lies between the direct voltage connections of the two bridges switched in parallel, and the branches of both bridges consist of FETs (T1 to T8) which are in the off-state at first, with the bus user circuit obtaining its supply voltage at first via parasitic diodes polarized in the direction of the current flow, measuring the voltages and their sign on the four connected bus leads, and, when a supply voltage is applied to precisely one of the reversal protector bridges, switching those two FETs where current flows through their parasitic diodes and switching two FETs to conducting which are diagonally opposite of one another in the other bridge.

2. A facility management or danger warning system, comprising a two-wire ring bus line which is used to supply voltage and to communicate with bus users which each comprise a bus user circuit which is each connected to the leads of the ring bus line via a reversal protector bridge, **characterized in that** the ring bus line extends through each bus user via the reversal protector bridge (BR1) and a further reversal protector bridge (BR2), the bus user circuit lies between the direct voltage connections of the two bridges switched in parallel, and the branches of both bridges consist of FETs (T1 to T8) which are in the off-state at first, with the bus user circuit obtaining its supply voltage at first via parasitic diodes polarized in the direction of the current flow, measuring the voltages and their sign on the four connected bus leads, and, when a supply voltage is applied to precisely one of the reversal protector bridges, keeps all FETs (T1 to T8) in the off-state.

3. A facility management or danger warning system, comprising a two-wire ring bus line which is used to supply voltage and to communicate with bus users which each comprise a bus user circuit which is each connected to the leads of the ring bus line via a reversal protector bridge, **characterized in that** the ring bus line extends through each bus user via the reversal protector bridge (BR1) and a further reversal protector bridge (BR2), the bus user circuit lies between the direct voltage connections of the two bridges switched in parallel, and the branches of both bridges consist of FETs (T1 to T8) which are in the off-state at first, with the bus user circuit obtaining its supply voltage at first via parasitic diodes polarized in the direction of the current flow, measuring the voltages and their sign on the four connected bus leads, and, when a supply voltage is applied to precisely one of the reversal protector bridges (BR1, BR2), closes the ring bus lines with correct polarity by triggering the respective FETs.

4. A system according to one of the claims 1 to 3, **characterized in that** the bus user circuit comprises an energy storage unit.

5. A system according to one of the claims 1 to 4, **characterized in that** the bus user circuit comprises a data storage unit, stores the discontinuation of the supply voltage as an error, and reports such an error to the central unit once the bus user has been connected with the central unit again.

6. A system according to one of the claims 1 to 5, **characterized in that** at least some of the bus users are warning devices.

## Revendications

1. Installation de domotique ou de signalisation de danger avec une conduite de bus annulaire à deux conducteurs pour l'alimentation électrique et pour la communication avec des appareils connectés au bus, comprenant chacun un circuit de connexion au bus qui est connecté aux conducteurs de la conduite de bus annulaire par un circuit en pont protégé contre les inversions de polarité, **caractérisée en ce que** la conduite de bus annulaire traverse chaque appareil connecté au bus via le circuit en pont protégé contre les inversions de polarité (BR1) et un autre circuit en pont protégé contre les inversions de polarité (BR2), **en ce que** le circuit de connexion au bus se trouve entre les raccords de courant continu montés en parallèle des deux circuits en pont, et **en ce que** les branches des deux circuits en pont se composent de FET (T1 à T8) qui se trouvent d'abord dans l'état isolé, dont les diodes parasites polarisées dans le sens de circulation du courant fournissent initialement sa tension d'alimentation au circuit de connexion au bus, lequel mesure les tensions et leur signe sur les quatre conducteurs du bus connecté et, quand une tension d'alimentation est présente sur précisément un des circuits en pont protégés contre les inversions de polarité, rend passants les deux FET dont les diodes parasites sont parcourues par le courant et deux FET se faisant face en diagonale dans l'autre circuit en pont.

2. Installation de domotique ou de signalisation de danger avec une conduite de bus annulaire à deux conducteurs pour l'alimentation électrique et pour la communication avec des appareils connectés au bus, comprenant chacun un circuit de connexion au bus qui est connecté aux conducteurs de la conduite de bus annulaire par un circuit en pont protégé contre les inversions de polarité, **caractérisée en ce que** la conduite de bus annulaire traverse chaque appareil connecté au bus via le circuit en pont protégé contre les inversions de polarité (BR1) et un autre circuit en pont protégé contre les inversions de polarité (BR2), **en ce que** le circuit de connexion au bus se trouve entre les raccords de courant continu montés en parallèle des deux circuits en pont, et **en ce que** les branches des deux circuits en pont se composent de FET (T1 à T8) qui se trouvent d'abord dans l'état isolé, dont les diodes parasites polarisées dans le sens de circulation du courant fournissent initialement sa tension d'alimentation au circuit de connexion au bus, lequel mesure les tensions et leur signe sur les quatre conducteurs du bus connecté et, quand une tension d'alimentation est présente sur les deux circuits en pont (BR1, BR2), maintient tous les FET (T1 à T8) dans l'état isolé.

3. Installation de domotique ou de signalisation de danger avec une conduite de bus annulaire à deux conducteurs pour l'alimentation électrique et pour la communication avec des appareils connectés au bus, comprenant chacun un circuit de connexion au bus qui est connecté aux conducteurs de la conduite de bus annulaire par un circuit en pont protégé contre les inversions de polarité, **caractérisée en ce que** la conduite de bus annulaire traverse chaque appareil connecté au bus via le circuit en pont protégé contre les inversions de polarité (BR1) et un autre circuit en pont protégé contre les inversions de polarité (BR2), **en ce que** le circuit de connexion au bus se trouve entre les raccords de courant continu montés en parallèle des deux circuits en pont, et **en ce que** les branches des deux circuits en pont se composent de FET (T1 à T8) qui se trouvent d'abord dans l'état isolé, dont les diodes parasites polarisées dans le sens de circulation du courant fournissent initialement sa tension d'alimentation au circuit de connexion au bus, lequel mesure les tensions et leur signe sur les quatre conducteurs du bus connecté et, quand une tension d'alimentation est présente sur les deux circuits en pont (BR1, BR2), ferme les conduites de bus annulaires en activant les FET correspondants selon la polarité correcte.

4. Installation selon l'une des revendications 1 à 3, **caractérisée en ce que** le circuit de connexion au bus comprend un accumulateur d'énergie.

5. Installation selon l'une des revendications 1 à 4, **caractérisée en ce que** le circuit de connexion au bus comprend une mémoire de données, enregistre une perte de la tension d'alimentation comme une erreur et signale cette erreur à l'unité centrale dès que l'appareil connecté au bus communique à nouveau avec l'unité centrale.

6. Installation selon l'une des revendications 1 à 5, **caractérisée en ce qu'**au moins certains des appareils connectés au bus sont des détecteurs d'alarme.
